(19) Europäisches Patentamt
European Patent Office
Office européen des brevets

(11) EP 0 994 423 A2

(12) **EUROPEAN PATENT APPLICATION**

(43) Date of publication:
**19.04.2000 Bulletin 2000/16**

(51) Int. Cl.[7]: **G06F 17/10**

(21) Application number: **99120260.7**

(22) Date of filing: **11.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.10.1998 US 174284**

(71) Applicant:
**MITSUBISHI DENKI KABUSHIKI KAISHA**
**Tokyo 100-8310 (JP)**

(72) Inventor: **Golding, Andrew R.**
**Cambridge, Massachusetts 02140 (US)**

(74) Representative:
**Pfenning, Meinig & Partner**
**Mozartstrasse 17**
**80336 München (DE)**

(54) **Smoothing algorithm for bayesian classifier**

(57) A Bayesian classifier includes an algorithm for estimating the true probability that a feature is present within a given class of examples by performing a linear interpolation between the maximum likelihood estimate of the probability that the feature is present within the class, and the maximum likelihood estimate of the probability that the feature is present in any class. The weighting factor used in the interpolation is based on the probability that the presence of the feature is independent of the given class. In one embodiment, this weighting factor is calculated as the chi-square probability that the observed association between the presence of the feature and the class is due to chance. The subject algorithm incorporated into the Bayesian classifier may be used to provide more accurate estimates of the so-called likelihood probabilities used by the Bayesian classifier, thus to allow the Bayesian classifier to perform more accurate classifications, with the Bayesian classifier being used for numerous applications in natural language processing and other fields. In one embodiment, the Bayesian classifier is applied to the natural-language processing task of correcting textual errors in which an incorrect word was inadvertently substituted for a correct word within a sentence.

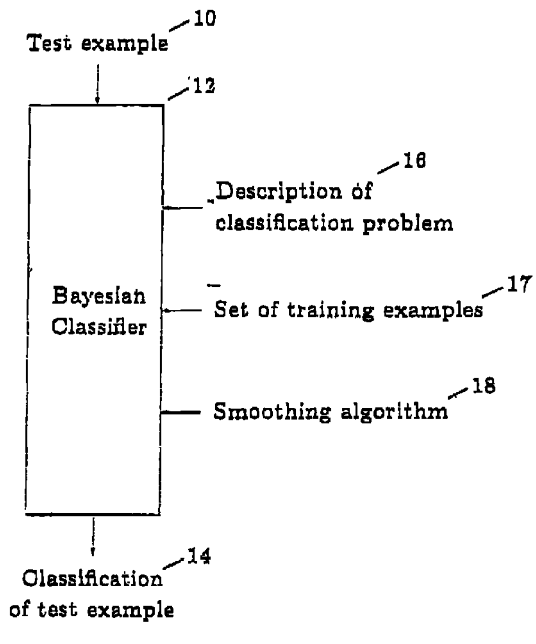


Figure 1: Block diagram of Bayesian classifier.

EP 0 994 423 A2

## Description

FIELD OF INVENTION

This invention relates to the utilization of Bayesian classifiers to classify, given a base of training examples, a new example whose category is to be established, and more particularly, to a smoothing algorithm for calculating Bayesian likelihood probabilities which permits improved classification accuracy.

BACKGROUND OF INVENTION

Bayesian classifiers are commonly used for classification tasks in natural language processing and many other fields. However, a problem with Bayesian classifiers is accurately estimating the so-called likelihood for each binary feature that is used by the Bayesian classifier. The simplest approach for estimating likelihoods is the so-called maximum likelihood estimate (MLE). However, the MLE often produces an estimate of 0.0 for the likelihood of rare features, thereby wrongfully eliminating from consideration one or more classes, and potentially leading to an incorrect classification by the Bayesian classifier. Numerous algorithms have been proposed to improve on the maximum likelihood estimate of likelihoods.

The job of a Bayesian classifier is to assign a target example to one of a finite number of classes. For example, one could imagine a classifier that, given a news article, automatically classifies it into one of 100 subject categories according to the main topic of the article. To do so, the classifier analyzes the target example in terms of its features. In the case of a news article, the set of features might include: "contains the word *baseball* or the phrase *home run*", or "contains the phrase *went up/down n points* (where *n* is a number)", and so on. For purposes of the discussion here, all features will be taken to be binary-valued, that is, they have exactly two possible values, either present or absent. Alternative kinds of features, such as those with more than two, but a finite number of values, or those with continuous values, will not be considered.

Bayesian classifiers assign a class to a given target example as follows: first, the classifier computes the set $\mathcal{F}$ of all features that are present in the example. It then calculates, for each class $\mathbb{C}$, the so-called posterior probability that the example belongs to class $\mathbb{C}$, given that the set $\mathcal{F}$ of features are present. This posterior probability is denoted P($\mathbb{C}|\mathcal{F}$), and is calculated using Bayes'rule, together with the standard assumption that the features are conditionally independent:

$$P(C|F)=(\prod_{f\in F} P(f|C))\frac{P(C)}{P(F)} \quad (1)$$

The class $\mathbb{C}$ with the largest posterior probability, P($\mathbb{C}|\mathcal{F}$), is chosen as the class assigned to the target example.

Top perform the calculation in the right-hand side of Equation 1, it is necessary to estimate the so-called likelihood probability, P($f|\mathbb{C}$), for each feature for each class. The simplest way to estimate the likelihood is to use the so-called maximum likelihood estimate (MLE), which estimates the likelihood from a set of training examples as follows:

$$P_{ML}(f|\mathbb{C}) = \frac{\text{\# of times } f \text{ was present for an example in class } \mathbb{C}}{\text{\# of examples in class } \mathbb{C}} \quad (2)$$

While the MLE is the simplest way to estimate likelihoods, it has a serious inadequacy for rare features; in particular, if a feature happens to occur 0 times in the training set for a particular class, then the MLE estimate of the likelihood will be 0.0, even though the true likelihood is non-zero — as would be apparent if the training set were large enough to contain an example of the feature for the class. The problem with saying that the likelihood, P($f|\mathbb{C}$), is 0.0, is that this will cause the resulting posterior probability, P($\mathbb{C}|\mathcal{F}$), as given by Equation 1, to also be 0.0. In effect, the Bayesian classifier will conclude that the example has a zero probability of being in class $\mathbb{C}$, even if there is overwhelming evidence from other features that the example is in fact in class $\mathbb{C}$. In other words, one mistaken likelihood of 0.0 is enough in completely negate the effect of a potentially huge body of evidence to the contrary.

For this reason, numerous algorithms more sophisticated than the MLE have been proposed for estimating Bayesian likelihood. The most similar method is to perform interpolation, as in Equation 8, but to use a fixed values of $\lambda$ for all features, rather than calculating it separately for each individual feature $f$ as in Equation 9. The fixed value of $\lambda$ is set by the method of *deleted estimation* from the training set (see Ney, Essen, and Kneser, "On structuring probabilistic dependencies in stochastic language modelling", *Computer Speech and Language*, 8:1-38, 1994). Note that because this approach uses the same value for all features, it is fundamentally more limited than the method presented here.

Two methods that have been reported in the machine-learning literature to produce the best results for Bayesian classification are Laplace-*m* and No-matches-0.01 (see Kohavi, Becker, and Sommerfield, "Improving simple Bayes", *Proceedings of European Conference on Machine Learning*, 1997). Laplace-*m* uses the following equation:

$$P_{Laplace}(f|\mathbb{C}) = \frac{(\text{\# of times } f \text{ was present for an example in class } \mathbb{C}) + 1/m}{(\text{\# of examples in class } \mathbb{C}) + 2/m} \quad (3)$$

where *m* is the number of examples in the training set. This equation is similar to Equation 2 for the MLE, except that it adds correction terms to the numerator and denominator to avoid giving an answer of zero. This method can also be seen be equivalent to the following interpolation:

$$P_{Laplace}(f|\mathbb{C}) = (1 - \lambda)P_{ML}(f|\mathbb{C}) + \lambda 1/2 \quad (4)$$

where $\lambda$ is set to a constant value as follows:

$$\lambda = \frac{(2/m)}{(\text{\# of example in class } \mathbb{C}) + 2/m} \quad (5)$$

From Equation 4, it can be seen that Laplace-*m* is effectively interpolating, using a fixed value of $\lambda$, between the MLE probability of $P(f|\mathbb{C})$ and 1/2, where 1/2 can be taken as a crude prior estimate of the probability that a binary-valued feature is present in the overall training set. (It is *crude* in that it assumes that the two values of the feature — absent or present — are equally likely.)

The No-matches-0.01 method takes a more direct approach to avoiding answers of 0.0 for likelihoods, as follows:

$$P_{No\text{-}matches\text{-}0.01}(f|\mathbb{C}) = \begin{cases} P_{ML}(f|\mathbb{C}) & \text{if } P_{ML}(f|\mathbb{C}) \neq 0 \\ 0.01/m & \text{if } P_{ML}(f|\mathbb{C}) = 0 \end{cases} \quad (6)$$

That is, it uses the MLE estimate $P_{ML}(f|\mathbb{C})$ it this estimate is non-zero; else it uses the estimate 0.01/*m*, where again *m* is the number of examples in the training set. Note that the quantity 0.01/*m* is smaller for larger training sets, capturing the intuition that as the training set gets larger, observing zero occurrences of the feature for all training examples in class $\mathbb{C}$ corresponds more and more closely to the true likelihood being zero. The overall intuition for the No-matches-0.01 method is that observing zero occurrences of the feature for all training examples in class $\mathbb{C}$ should

not be taken literally to be a true zero, but rather represents some small fractional number of occurrences; however, the exact value uses — here, $0.01/m$ , seems somewhat arbitrary.

Two methods that have been reported in the Computational Linguistics literature to have the best performance for language tasks are Katz smoothing and Knesser-Ney smoothing (see Chen and Goodman, "An empirical study of smoothing techniques for language modeling", *Proceedings of the 34th Annual Meeting of the Association for Computational Linguistics*, 1996; and Stan Chen, personal communication, 1998). Both methods work essentially the same way: like the No-matches-0.01 method, whenever they observe zero occurrences of a feature for all training examples in class $\mathbb{C}$, they pretend that there were actually a fractional (but non-zero) number of occurrences. In addition, when they observe a *positive* number of occurrences of a feature for all training examples in class $\mathbb{C}$, they pretend that there were actually a fractional number *less* of occurrences. In other words, the "rob" fractional number of occurrences from the "rich" features, and give them to the poor. In this way, the total number of occurrences remains constant in the overall set of statistics.

## SUMMARY OF INVENTION

In order to diminish the possibility of a mistaken likelihood, an improved Bayesian classifier is provided with a smoothing algorithm that interpolates between two estimates of the likelihood of a feature given a class. The result is a Bayesian classifier with better classification accuracy.

For purposes of discussion, the likelihood will be represented as $P(f|\mathbb{C})$ for a feature $f$ given a class $\mathbb{C}$. The interpolation of the subject invention between two estimates of this likelihood of a feature given a class involves calculating the probability that the presence of the feature is independent of the class. In one embodiment, this probability is calculated using a chi-square test.

More particularly, the first estimate is $P_{ML}(f|\mathbb{C})$, that is, the maximum likelihood estimate of the probability that the feature is present in an example of class $\mathbb{C}$, as given in Equation 2. The second estimate is $P_{ML}(f)$, that is, the maximum likelihood estimate of the probability that the feature is present in any example, regardless of class, calculated as:

$$P_{ML}(f) = \frac{\text{\# of times } f \text{ was present for a training example}}{\text{\# of training examples}} \qquad (7)$$

It will be appreciated that the first estimate, $P_{ML}(f|\mathbb{C})$, measures the right quantity, that is, the conditional probability of the feature given the class, but as noted above, it may measure the quantity egregiously inaccurately. The second estimate, $P_{ML}(f)$, seems to measure the wrong quantity, that is, it ignores the class when calculating the probability. However, it measures this quantity relatively robustly, in that it effectively pools the training examples for all classes, rather than counting the number of feature occurrences within one class.

The subject system combines the two estimates using the standard equation for interpolation:

$$P_{interp}(f|\mathbb{C} = (1 - \lambda)P_{ML}(f|\mathbb{C}) + \lambda P_{ML}(f) \qquad (8)$$

where $0 \le \lambda \le 1$.

The novel aspect of the subject system is in how the value of $\lambda$ is set. As above, it will be appreciated that the value $P_{ML}(f)$ seems to measure the wrong quantity, because it ignores the class. However, this is the correct thing to do to the extent that the probability of the feature's presence is in fact independent of the class. In the extreme case, if the feature's presence were known to be completely independent of the class, then $P_{ML}(f)$ would be measuring the right quantity, and, as mentioned above, it is more robust measurement than $P_{ML}(f|\mathbb{C})$ because it is based on more data. With these considerations in mind, in the subject invention, $\lambda$ is set as follows:

$$\lambda = P(\text{presence of feature } f \text{ is independent of class } \mathbb{C}). \qquad (9)$$

In one embodiment, λ is calculated as the chi-square probability that the observed association between $f$ and $\mathbb{C}$ is due to chance.

In summary, a Bayesian classifier is provided in which a smoothing algorithm is employed utilizing the chi-square probability that the observed association between a feature and a class is due to chance. The degree to which it is due to chance is used as a weighting factor to interpolate between the maximum likelihood estimate of the probability that the feature is present in an example of a given class and the maximum likelihood estimate of the probability that the feature is present in any example, regardless of its class.

Classifications done in this manner are exceedingly robust and occurrences which would ordinarily be misclassified are now classified correctly.

BRIEF DESCRIPTION OF THE DRAWINGS

These and other features of the subject invention will be better understood in accordance with the Detailed Description in conjunction with the Drawings of which:

Figure 1 is a block diagram of a Bayesian classifier using the subject smoothing algorithm;

Figure 2 is a flowchart of the overall operation of a Bayesian Classifier; and,

Figure 3 is a flowchart of the subject system for performing smoothing so as to provide accurate estimates of Bayesian likelihood probabilities.

DETAILED DESCRIPTION OF THE DRAWINGS

Referring now to Figure 1, a test example 10 is processed by a Bayesian classifier 12, which employs Bayes'rule, as given in Equation 1, to assign the test example to one of a finite number of classes, resulting in a classification of the test example 14.

In order to calculate the probabilities on the right-hand side of Bayes'rule, the Bayesian classifier requires three items. First, it requires a description of the classification problem 16, which gives the number of classes and the number of features in the problem. Second, it requires a set of training examples 17, that is, a set of examples together with the correct classification for each example, from which counts may be made of relevant quantities, such as the number of times a given feature was present in examples of a given class. Third, it requires a smoothing algorithm 18, that is, a method for accurately estimating the likelihood probabilities on the right-hand side of Bayes'rule, which utilizes the counts of relevant quantities that were made over the set of training examples 17.

Figure 2 describes the operation of the Bayesian classifier in more detail by way of a flowchart. The input to the Bayesian classifier is a test example $E$ 10 to classify. It will be appreciated that the over-all operation of the Bayesian classifier is to calculate the posterior probability $P(\mathbb{C}|\mathcal{F}$ that each class $\mathbb{C}$ is the correct class of example $E$, given that the example has been observed to have the set $\mathcal{F}$ of features, and to then select as the answer the class $\mathbb{C}_{max}$ with the largest posterior probability. The calculation of the posterior probability $P(\mathbb{C}|\mathcal{F})$ is performed by evaluating the right-hand side of Bayes'rule, as given in Equation 1. At 20, an accumulated probability $P_c$ is established for each class $\mathbb{C}$, the purpose being to accumulate the results of the calculation for $P(\mathbb{C}|\mathcal{F}$ as they are generated. At 20, each accumulated probability $P_c$ is initialized to $P(\mathbb{C})$, the prior probability for the class, which is calculated from counts made over the set of training examples. In particular, $P(\mathbb{C})$ is calculated as the number of training examples in class $\mathbb{C}$ divided by the total number of training examples.

At 22, an iterative procedure is begun, each iteration incorporating the likelihood probability, $P(f|\mathbb{C})$, for one feature $f$ in the set of $\mathcal{F}$ of features that are present in the test example. If all features in set $\mathcal{F}$ have not yet been processed, then the Bayesian classifier proceeds with the next feature $f$. At 24, the likelihood probability $P(f|\mathbb{C})$ for each class $\mathbb{C}$ is calculated using the smoothing algorithm. At 25, the likelihood probability $P(f|\mathbb{C})$ for each class $\mathbb{C}$ is incorporated into the accumulated probability $P_c$ by multiplying $P_c$ by $P(f|\mathbb{C})$.

At 26, the likelihoods for all features have been incorporated, thus the accumulated probabilities include all terms on the right-hand side of Equation 1 except for the denominator $P(\mathcal{F})$. Rather than compute $P(\mathcal{F})$ explicitly, however, one need only observe that the posterior probabilities $P(\mathbb{C}|\mathcal{F})$ must sum to 1.0, as they describe a set of mutually exclusive, exhaustive outcomes, and therefore one can derive the correct posterior probabilities merely by scaling them to sum to 1.0, as is done at 26.

At 27, the posterior probabilities have been calculated, and thus all that remains is to select as the answer the class $\mathbb{C}_{max}$ with the largest posterior probability. At 14, class $\mathbb{C}_{max}$ is output as the classification of the test example.

The aspect of the Bayesian classifier that is novel in the subject invention is the smoothing algorithm used at 24 to calculate the Bayesian likelihoods, $P(f|\mathbb{C})$. Figure 3 gives a flowchart of the smoothing algorithm. It will be appreciated that the overall operation of the smoothing algorithm is to perform linear interpolation between two maximum likelihood estimates, as specified in Equation 8. The input to the algorithm is a feature $f$ and a class $\mathbb{C}$ 30 that together specify which Bayesian likelihood is to be calculated. At 32, the first maximum likelihood estimate is calculated, which is for the probability that feature $f$ is present within class $\mathbb{C}$. This maximum likelihood estimate is calculated from counts made over the set of training examples. In particular, it is calculated as the count of the number of times feature $f$ was present for an example in class $\mathbb{C}$ divided by the number of examples in class $\mathbb{C}$.

At 34, the second maximum likelihood estimate is calculated, which is for the probability that feature $f$ is present in any class. This maximum likelihood estimate is also calculated from counts made over the set of training examples. It is calculated as the count of the number of times feature $f$ was present for an example divided by the total number of examples.

At 36, the weight $\lambda$ is calculated, which will be used to linearly interpolate between the two maximum likelihood estimates. The weight $\lambda$ is set to the probability that the presence of feature $f$ is independent of class $\mathbb{C}$. In one embodiment, this probability is calculated as the chi-square probability that the observed association between feature $f$ and class $\mathbb{C}$ is due to chance.

At 38, the actual linear interpolation is performed, using the two maximum likelihood estimates and the weighting factor $\lambda$ derived in the preceding steps. The resulting estimate of the Bayesian likelihood, $P_{interp}(f|\mathbb{C})$ 39, is returned as the output of the smoothing algorithm. It will be appreciated that this value is an extremely robust and accurate estimate of the true Bayesian likelihood, as can be seen both on theoretical grounds, from its principled derivation in which it weights $P_{ML}(f)$ precisely as much as it should be weighted, that is, to the extent that feature $f$ is independent of class $\mathbb{C}$, and on empirical grounds, as shown by its superior ability, compared to other known smoothing algorithms, to afford accurate classifications when used within a Bayesian classifier, as demonstrated in a system comparison (see next section).

<u>SYSTEM COMPARISON</u>

The performance of a Bayesian classifier using the subject smoothing algorithm, versus using each of the five smoothing methods described in the preceding section, is now presented. As a baseline, the comparison also includes a Bayesian classifier using no smoothing method, that is, using plain MLE likelihoods.

The particular classification task chosen as the test task is context-sensitive spelling correction. This is the task of deciding, given a particular sentence, a correctly-spelled target word within that sentence, and a set of possible alternatives for that target word, which word in the set was actually intended by the writer. For example, given the sentence "I'd like the chocolate cake for desert", the target word "desert", and the set of alternatives {"desert", "dessert"}, the task is to decide which word was actually intended, "desert" or "dessert". Put another way, the task is to *classify* the target example as a "desert" sentence or a "dessert" sentence.

Running the classifier requires obtaining a training set and a test set. The training set is used for calculating the (smoothed) likelihood values and prior probabilities, which are used on the right-hand side of Equation 1. The test set is used for evaluating how well the classifier performs on examples that were unseen during training. The training set consisted of 80 % of the sentences, chosen randomly, from the Brown corpus (see Kucera and Francis, *Computational Analysis of Present-Day American English*, Brown University Press, 1967). The test set consisted of the remaining 20 % of the sentences in Brown.

To cast the problem as a classification task, one must define a so-called *confusion set*, or set of alternatives, among which the classifier is trying to decide. In the example above, the confusion set was {"desert", "dessert"}. For this confusion set, the job of the classifier is to decide, for each occurrence of "desert" or "dessert" in the test set, which of the two words was actually intended by the writer. Note that because the Browns corpus can be assumed to be correct, one can verify whether the classifier gave the right answer by comparing its classification to the observed spelling of the word in the Brown corpus. In this way, one can derive on overall score for the classifier for a given confusion set, which is equal to the percentage of examples in the test set for which the classifier's answer agreed with the spelling provided in the Brown corpus.

To get a more robust estimate of the classifier's performance on this task, the classifier was run not just on one confusion set, but on 21 different confusion sets. These were taken largely from the list of "Words Commonly Confused" in the back of the Random House dictionary (see Flexner, ed., *Random House Unabridged Dictionary*, Random House, 1983). The confusion sets were selected on the basis of being frequently-occurring in the Brown corpus, and include mainly homophone confusions, such as {"peace", "piece"}. Several confusion sets not in Random House were added, representing grammatical errors, such as {"among", "between"}, and typographic errors, such as {"maybe", "may be"}.

Results are reported as the score for the classifier for the words in all 21 confusion sets pooled together. That is, the classifier is asked to classify all occurrences of all words in the 21 confusion sets, and its score is the percentage of examples for which its classification agrees with the classification in the Brown corpus. The scores, using the different smoothing methods, are as follows:

| Smoothing method | Score |
|---|---|
| No smoothing (MLE likelihoods) | 85.8 |
| Interpolation with a fixed λ | 89.8 |
| Laplace-*m* | 90.0 |
| No-matches-0.01 | 91.0 |
| Katz smoothing | 91.6 |
| Kneser-Ney smoothing | 93.4 |
| Subject smoothing algorithm | 93.8 |

Some details about the implementations of the different smoothing methods: When using no smoothing (i.e., MLE likelihoods), ties were broken by choosing the word with the largest prior probability (ties arose when all words had probability 0.0). For Katz smoothing, absolute discounting was used (see Ney, Essen, and Kneser, "On structuring probabilistic dependences in stochastic language modeling", *Computer Speech and Language*, 1994), as Good-Turing discounting resulted in invalid discounts for the present task. For Kneser-Ney smoothing, absolute discounting was used and the backoff distribution was based on the "marginal constraint". For interpolation with a fixed λ, Katz, and Kneser-Ney, the necessary parameters were set separately for each word in the confusion set using deleted estimation.

It can be seen that the subject smoothing algorithm afforded the bighest classification accuracy of all methods tried for the task of context-sensitive spelling correction. Moreover, this evaluation was done on 21 different confusion sets, thereby representing a robust evaluation of classifier performance. This provides strong empirical evidence that a Bayesian classifier using the subject smoothing algorithm, as compared with other known smoothing methods, does in fact achieve higher classification accuracy.

Having above indicated several embodiments of the Subject Invention, it will occur to those skilled in the art that modifications and alternatives can be practiced within the spirit of the invention. It is accordingly intended to define the scope of the invention only as indicated in the following claims:

## Claims

**1.** A Bayesian classifier comprising:

A test example having some set of features, and which must be assigned by the Bayesian classifier to one of a finite number of classes;

A description of the classification problem indicating the number of classes, and the number of features that can be present in said test example;

A set of training examples including a set of examples together with their correct classifications;

A smoothing algorithm including a means for estimating the true likelihood that a given feature is present within a given class of examples;

Means, coupled to said test example, said description of said classification problem, said set of training examples, and said smoothing algorithm, for estimating the posterior probability that said test example is in each of the possible classes to which it may be assigned;

Means coupled to said estimating means for selecting the class with the highest posterior probability and for displaying said highest posterior probability class.

**2.** The classifier of claim 1 wherein said smoothing algorithm includes means for calculating the maximum-likelihood estimate of the probability that a given feature is present in a given class, means coupled to said maximum-likelihood estimate of the probability that a given feature is present in a given class for calculating the maximum-likelihood estimate of the probability that said feature is present in any class, means for calculating the probability that said feature is independent of said class, thereby to derive an interpolation weight, and means for interpolating between the maximum-likelihood estimate of the probability that said feature is present in said class and the maximum-likelihood estimate of the probability that said feature is present in any class utilizing said interpolation weight.

**3.** The Bayesian classifier of claim 2 wherein for a feature $f$ and a class $\mathbb{C}$, the smoothed likelihood of feature $f$ being present in examples of class $\mathbb{C}$ is equal to

$$(1 - \lambda) P_{ML}(f|\mathbb{C}) + \lambda P_{ML}(f)$$

where:

$$\lambda = P(\text{presence of feature } f \text{ is independent of class } \mathbb{C})$$

$$P_{ML}(f|\mathbb{C}) = \frac{\#\text{ of times } f \text{ was present for an example in class } \mathbb{C}}{\#\text{ of examples in class } \mathbb{C}}$$

$$P_{ML}(f) = \frac{\#\text{ of times } f \text{ was present for an example}}{\#\text{ of examples}}$$

and where the number of times $f$ was present for an example in class $\mathbb{C}$, the number of examples in class $\mathbb{C}$, the number of times $f$ was present for an example, and the number of examples are calculated as counts over said set of training examples.

**4.** The Bayesian classifier of claim 3 wherein the probability that the presence of feature $f$ is independent of class $\mathbb{C}$ is calculated as the chi-square probability that the observed association between the presence of feature $f$ and class $\mathbb{C}$ is due to chance.

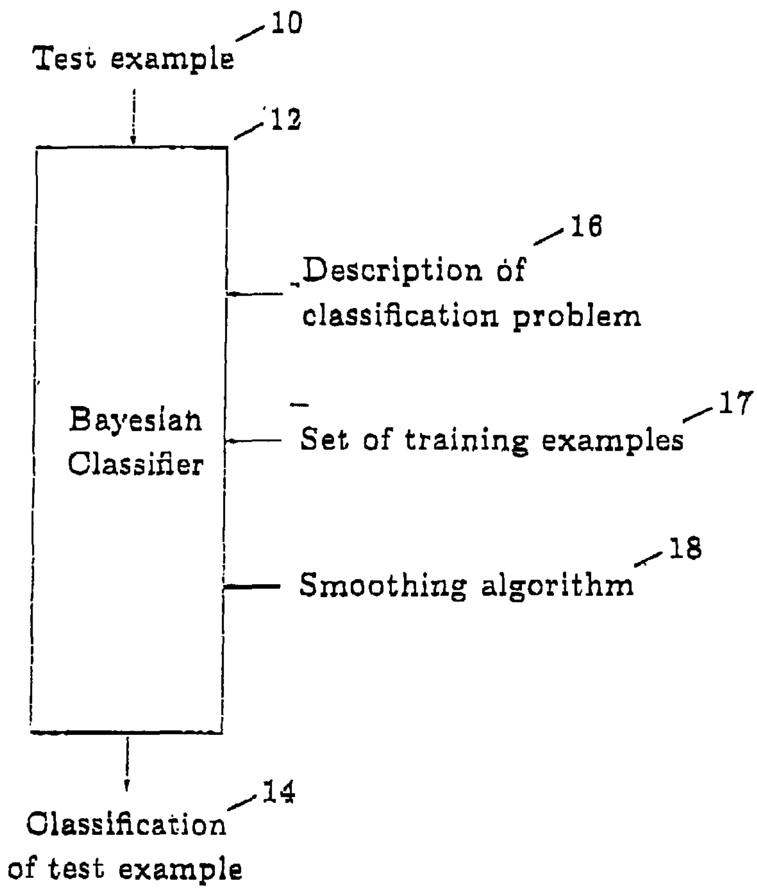


Figure 1: Block diagram of Bayesian classifier.

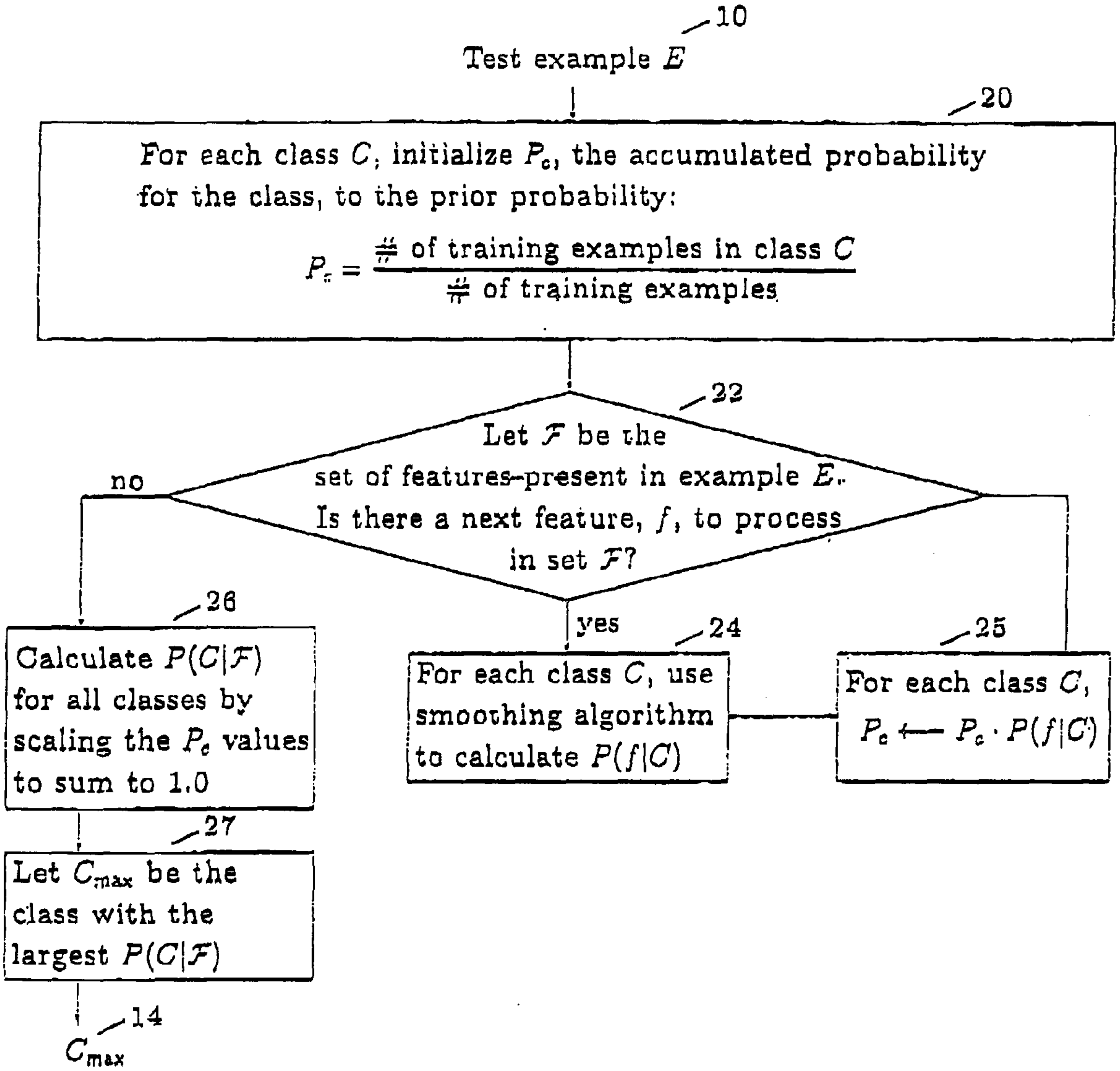


Figure 2: Flowchart of Bayesian classifier.

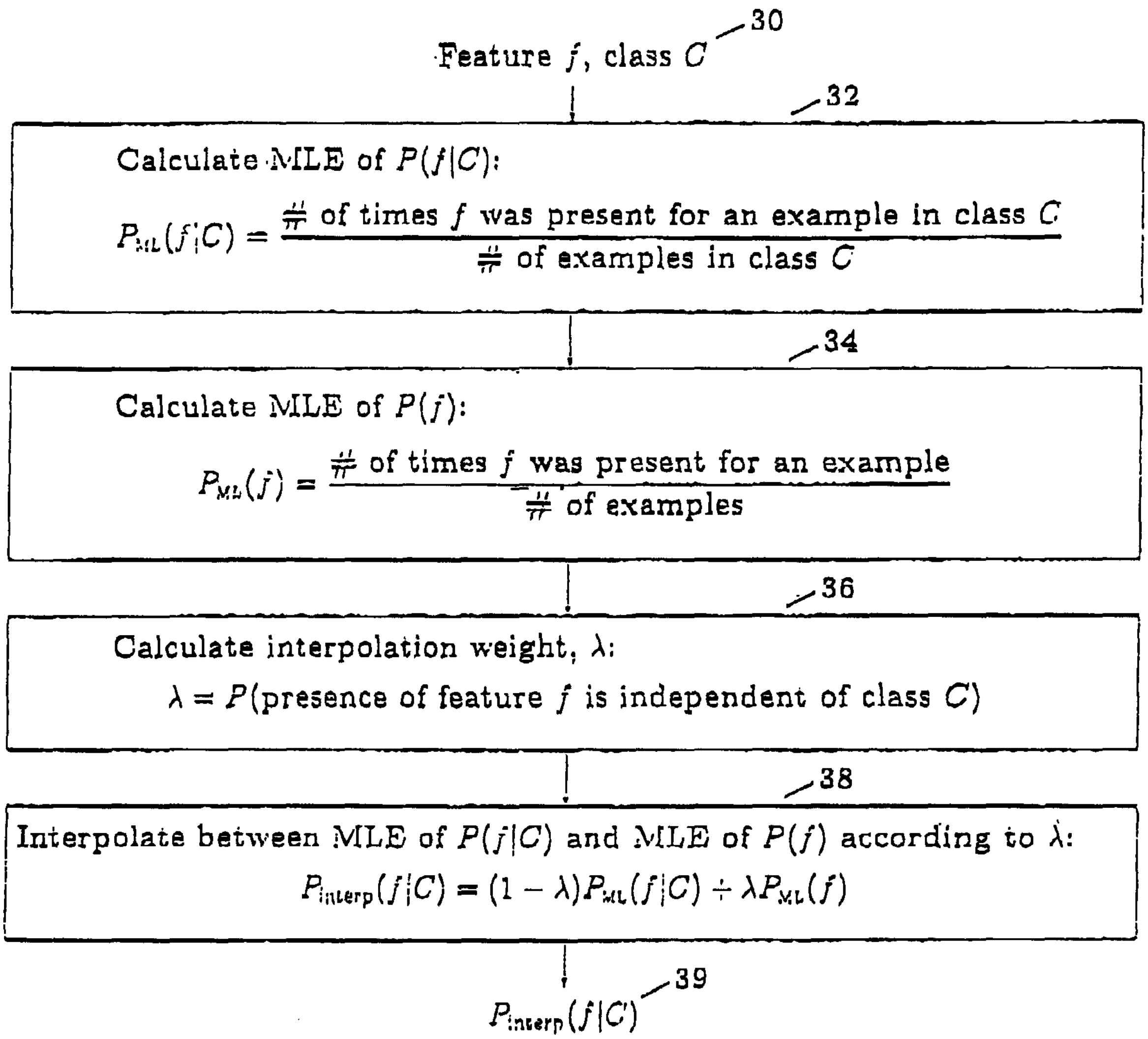


Figure 3: Flowchart of smoothing algorithm.